# EUROPEAN PATENT APPLICATION

(11) **EP 2 996 184 A1**
(43) Date of publication of application: **16.03.2016**
(21) Application number: 15165515.6
(22) Date of filing: 28.04.2015
(51) Int. Cl.: H01M 8/02, H01M 8/04, H01M 8/0234, H01M 8/0239, H01M 8/0243, H01M 8/0245, H01M 8/04119, H01M 8/10, H01M 8/1018

(54) **A METHOD TO PRODUCE A GAS DIFFUSION LAYER AND A FUEL CELL COMPRISING A GAS DIFFUSION LAYER**

(30) Priority: 09.09.2014 EP 14184065
(71) Applicant: Paul Scherrer Institut, 5232 Villigen (CH)
(72) Inventor: Boillat, Pierre, 8005 Zürich (CH); Büchi, Felix, 4900 Langenthal (CH); Gubler, Lorenz, 5417 Untersiggenthal (CH); Forner Cuenca, Antoni, 8057 Zürich (CH); Padeste, Celestino, 5400 Baden (CH)
(74) Representative: Fischer, Michael

(57) **Abstract**

The present invention discloses a method of manufacturing gas diffusion layers (GDL) with a defined pattern of hydrophobic and hydrophilic regions.

In detail, a method method to produce electrically conductive porous materials for use as gas diffusion layer with distributed wettability, comprising the steps of:
(a) Coating the external and internal surfaces of a porous material made of carbon fiber with Fluoroethylene-Propylene (FEP);
(b) Exposing such coated material to irradiation, such as an electron beam or photon beam, through a blocking mask such that only parts of the coated porous material are exposed;
(c) Immersing such previously exposed material in a monomer solution and heating to a temperature higher than 45°C, resulting in the graft co-polymerization of monomers on the FEP layer.

## Description

The present invention relates to a method to produce a gas diffusion layer and a fuel cell comprising said gas diffusion layer.

The idea of engineering water pathways through gas diffusion layers in fuel cells is a permanent topic in the operation of fuel cell stacks. The propose application optimizes water discharge on the cathode side: the use of such pathways to humidify the cell from the anode side has not been proposed yet.

The presence of holes as engineered water pathways has been reported a few times, including *ex situ* and *in situ* measurements to study the effect of this approach. The generated holes having 80µm diameters using a laser and an improved performance in a small scale cell (1 cm²) using this perforated gas diffusion layers has been reported. An improved stability in a 6-cells stack (area of 30 cm²) was reported in which the GDL has been modified in this way, and in an *ex situ* study using environmental scanning electron microscopy (ESEM) water accumulation in perforated GDLs was visualized.

Laser perforation of GDLs was also reported. Much larger holes (300 µm) and with a high hole density were used. *In situ* tests using polarization curves and neutron imaging have shown some improvement in certain conditions (low current and low humidity), but also increased mass transport losses for such large holes. Finally, the use of mechanical pinning was reported to create one single hole at specific locations of a single channel fuel cell (under the flow channel or under the land, and near the inlet or outlet of the cell), and the impact of this hole on water distribution was studied.

Compared to these methods the wettability change using radiation grafting according to the present invention is more cost-effective and allows higher design flexibility. For example, elongated in-plane water pathways cannot be realized using holes. Furthermore, a better durability is obtained due to the covalent bonding of the grafted hydrophilic compound.

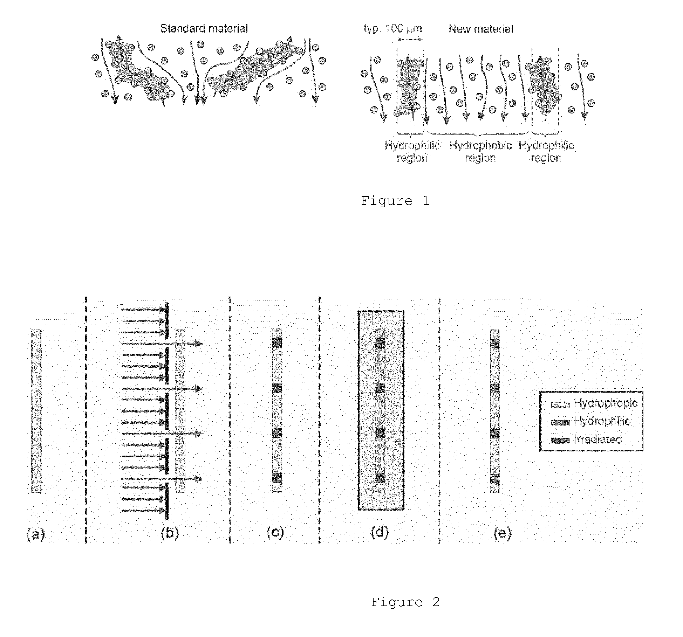

The present invention discloses a method of manufacturing gas diffusion layers (GDL) with a defined pattern of hydrophobic and hydrophilic regions. The interest of such materials for fuel cell applications is their potential use on the cathode side to improve the transport of oxygen in presence of liquid water, as discussed in the literature and illustrated in Figure 1. Figure 1 illustrates the relation between the pathways for liquid water and for reactant gases in porous materials. Left: in standard hydrophobic materials. Right: in the new proposed material according to the present invention.

A further possibility of application is to use this invention as a help for evaporation cooling in fuel cells and electrolyzers, using the hydrophilic pathways as a help to guide water injection. Other applications relying on porous supports that require through plane conduction of water or any other liquid can benefit from this material, such as microfluidics (dialysis).

The present invention is provided by the independent claims 1 and 12. Preferred embodiments are given in the dependent claims 2 to 11 and 13 to 15.

The proposed method to synthesize such a material is based on radiation induced graft polymerization. The originally hydrophobic material is exposed to a beam which is masked in certain regions. Alternatives to define the exposed regions are to use lithography or a scanning pencil beam. The regions which have been exposed are "activated". Consequently the graft copolymerization process will occur only in these regions. The synthesis process is summarized in Figure 2. Figure 2 shows the synthesis method according to the present invention for the porous material with patterned wettability. (a): Base porous material (hydrophobized). (b): Irradiation using a mask. (c): Locally irradiated base material. (d): Impregnation with grafting solution. (e) Resulting material with patterned wettability.

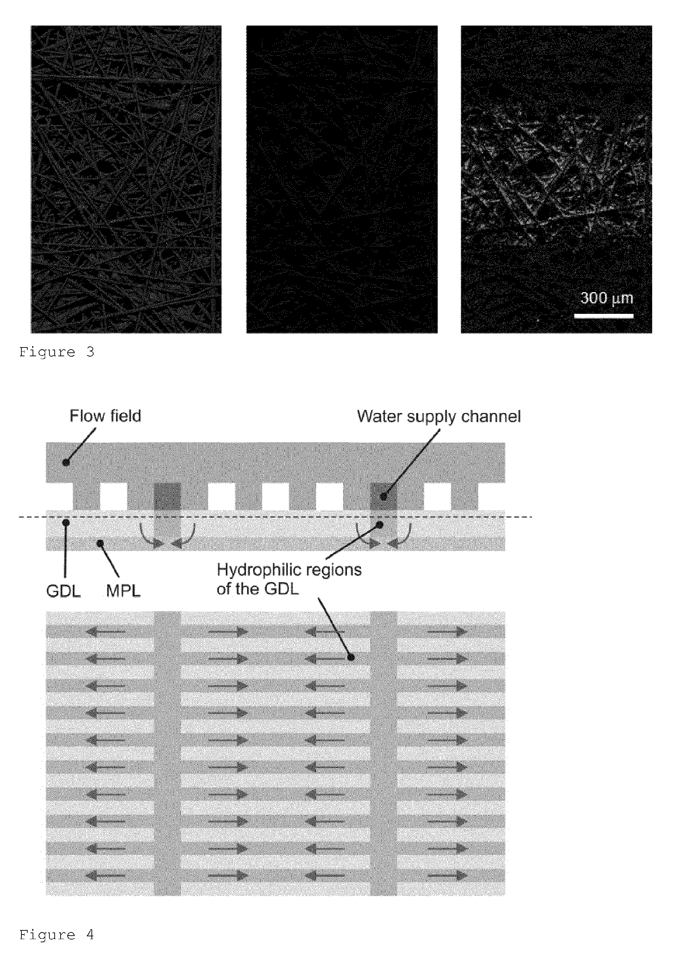

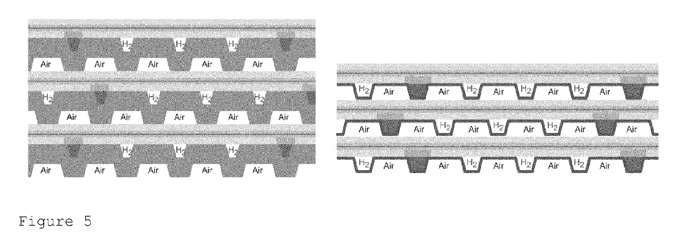

Currently, the realization of a first GDL hydrophobized using Fluoro-Ethylene-Propylene and with localized grafting of Acrylic Acid as a hydrophilic compound has been demonstrated. For this example a gas diffusion layer commercially available Toray TPGH-090 was coated with 30% weight of FEP and sintered. The material was then irradiated with an electron beam of 1.5 MeV energy and 50.0 kGy dose. A mask of 2 mm thickness stainless stell was used with drilled slits of 500 µm. The irradiated material was placed into a reactor of 50 mL and 50 mbar pressure. The grafting solution (15% vol Acrylic acid in water) was pumped in after 60 min of nitrogen bubling. The reaction was brought to a temperature of 60°C during The distribution of the different components visualized by SEM-EDX is shown in Figure 3. The current method uses vacuum for a correct wetting of the material with the grafting solution, but there are good chances that the process can be realized in a more cost effective way, for example using a surfactant or vapor phase grafting. Figure 3 shows SEM-EDX mappings of a gas diffusion layer hydrophobized using FEP and locally grafted with Acrylic Acid according to the present invention. Left: C (carbon) signal showing the carbon fibers. Middle: F (fluorine) signal showing the distribution of coating. Right: Na (sodium) signal showing the grafted Acrylic Acid, after exchange in NaOH for visualization purposes.

It is believed that this method is of significant interest, since the performance of the fuel cell is improved by the use of this material. Moderate additional costs are expected due the simplicity of the process and the low cost of the chemicals involved.

General thoughts on patentability
- The general concept of a GDL with hydrophobic and hydrophilic regions is reported in the literature.
- The process details are not published yet. In particular, the use of FEP as hydrophobizing agent prior to grafting was not published. The use of FEP is a critical part of the process (due to better radiation resistance and grafting kinetics of this material compared to the PTFE normally used for hydrophobization). The patent application therefore covers all GDL using FEP as hydrophobizing agent which is grafted afterwards".

In addition, the implementation of the evaporation cooling concept using the material above can be realized. The direct injection of liquid water in a fuel cell for the purpose of humidification and cooling has important advantages:
- Operation of the cell with dry gases, suppressing the bulky and costly external humidifiers
- Efficient cooling, potentially suppressing the need for an additional coolant circulation

The practical implementation of evaporation cooling is difficult. Our studies on differential cells have shown that, on the local scale, humidification from the anode side is much more effective than from the cathode side. However, due to the permeation through the membrane and the electro osmotic drag, water injected in the anode inlet will be transported to the cathode side. Figure 4 shows fine distribution of water supply using engineered hydrophilic channels in the GDL. Below the water soaked hydrophilic regions, hydrogen is transported to the electrode through the hydrophobic micro-porous layer (MPL) usually present in fuel cells.

The present invention now uses a design that provides some of the channels on the anode side (for example, each 3^{rd} channel) as water supply channels being completely flooded with water (these supply channels are connected to another manifold than the hydrogen supply channels). To transport the water efficiently to the regions between the water supply channels, elongated hydrophilic water pathways are created in the GDL (using the method described above). To avoid gas bubbling into the water supply channels, those can optionally be covered by a hydrophilic region as illustrated in Figure 4. As the transport of gas is not very critical on the anode side, a significant portion of the GDL volume (e.g. 50% or even 75%) can be used for the transport of water. Besides their role in distribution the water away from the water supply channels, the finely spaced hydrophilic channels are appropriate to increase the water surface for a more efficient evaporation.

The key interest of the present invention resides in the fact that the use of the common components can be maintained and nothing is particularly added compared to the classical fuel cell technology. The extra cost of the present GDL modification method is offset by the system cost reduction due to the suppression of external humidifiers. Even further, if the evaporation cooling is, as targeted, sufficient to remove all the heat produced, a further cost and size reduction by suppressing the coolant circulation and by using monolithic separator plates can be expected. Such a design is illustrated in Figure 4. Due to these advantages, the present idea has a large potential compared to the existing designs for evaporation cooling. Figure 4 illustrates a stack based on the present idea, without coolant channels and using monolithic plates made of carbon (left) or stamped stainles steel (right).

General thoughts on Patentability
- The use of a GDL with hydrophilic pathways to this purpose was never reported. The most critical prior art is probably that of Fabian et al. (WO 2005/ 035 271 A1) where a mixed hydrophobic/hydrophilic layer is used for evaporation cooling. However, they do not use the GDL to this purpose (they use an additional layer), and do not use our concept of water supply channels.

The present invention provides a significant advantage compared to other proposed ideas due to the following features:
- The use of an industrially available irradiation method (e-beam) and low cost chemicals, providing a cost advantage to other proposed methods (e.g. deposition inkjet or screen printing)
- The use of a chemical modification method with a better durability as compared to other physical deposition methods
- Compared to some of the methods (e.g. perforation), the present design offers a significantly higher flexibility for the design of the hydrophilic area/volumina of a gas diffusion layer.

On the evaporation cooling (application) disclosure, the significant advantage of the present inventions resides in the fact that no additional layer is included, and that no layer is significantly bulkier or expensive than in classical fuel cell designs (as opposed, for example, to the water transport plates of the UTC design). Thus, the following advantages are realizable:
- Reduced stack and system cost, which is critical for automotive applications
- Reduced system size (= increase of power density), which is essential as well for automotive applications

## Claims

1. A method to produce electrically conductive porous materials with distributed wettability, comprising the steps of:
(a) Coating the external and internal surfaces of a porous material made of carbon fiber with Fluoroethylene-Propylene (FEP);
(b) Exposing such coated material to irradiation, such as an electron beam, through a blocking mask such that only parts of the coated porous material are exposed;
(c) Immersing such previously exposed material in a monomer solution and heating to a temperature higher than 45°C, resulting in the graft co-polymerization of monomers on the FEP layer.

2. The method according to claim 1, wherein the base material is a porous material made of Titanium or any other electrically conductive or non-conductive material.

3. The method according to claim 1 or 2, wherein the coating polymer (a) is perfluoroalkoxy (PFA), Ethylene-Tetrafluoroethylene (ETFE) or any other hydrophobic polymer.

4. The method according to any of the preceding claims,
wherein the applied coating (a) can be distributed over the thickness in whatever configuration, such as homogeneusly distributed over the thickness.

5. The method according to any of the preceding claims
wherein any photon-type radiation is used for radiation, in whatever energy range from UV to gamma sources.

6. The method according to any of the preceding claims
wherein particle beam (accelerated ions or molecules) is used to generate initiators, such us plasma, accelerated and heavy ions.

7. The method according to any of the preceding claims
wherein the penetration depth of the beam can be regulated to whatever value in order to obtained a targeted modification depth. Previously produced stacks of various materials, such us gas diffusion layer and microporous layers can be modified being selectively to particular layers.

8. The method according to any of the preceding claims,
wherein any patterned design can be defined, such us parallel slits or circles.

9. The method according to any of the preceding claims,
wherein lithography methods can be used.

10. The method according to any of the preceding claims,
wherein the monomer solution of step (c) contains a radically activated monomer resulting in graft copolymerization of a hydrophilic polymer, such us N-nivylformamide, acrylic acid, methacrylic acid, styrene, sufonated styrene, vinylpyridine, glycerol methacrylate among others.

11. The method according to any of the preceding claims,
wherein the monomer solution is used as a pure liquid or is diluted with a solvent or/and other compounds and one or more additional monomers.

12. The method according to any of the preceding claims,
whereing with an additional step (d) consisting on further exposing the material to solutions and different pressure and temperature conditions in order to pursue additional chemical reaction to further reduce the contact angle or implement another desired property, such us hydrolysis or sulfonation.

13. The method according to any of the preceding claims,
wherein negative pressures are additionally applied in step (c) to allow the penetration of the solution into the material pores.

14. The method according to any of the preceding claims,
wherein a surfactant or any lowering surface tension agents are added to the monomer solution to allow the penetration into the material pores.

15. The method according to any of the preceding claims,
wherein the material is exposed to vapor phase of the monomer or any other mixture of gases.

16. A fuel cell where a gas diffusion layer of the anode side, preferably produced by a method according to any of the preceding claims, comprises hydrophilic parts in order to achieve a distributed wettability and part of channels in an anode flow plate aligned with said gas diffusion layer are connected to a water inlet and flooded with water wherein the water channels and the hydrophilic parts of the GDL form a water supply network used to humidify the fuel cell.

17. The fuel cell according claim 16, wherein the heat removal by water evaporation is sufficient to remove all the heat produced in the fuel cell, suppressing the need of an additional cooling system.

18. The fuel cell according to claim 16 and 17 wherein the water supply network is placed on the cathode side instead of the anode side.

19. The fuel cell according to any of the preceding claims 16 to 18, wherein the water supply network used for the supply of water in an electrolyser stack or in a stack of fuel cells.
